(19) **Europäisches Patentamt / European Patent Office / Office européen des brevets**

(11) **EP 2 630 464 B1**

(12) **FASCICULE DE BREVET EUROPEEN**

(45) Date de publication et mention de la délivrance du brevet:
**10.12.2014 Bulletin 2014/50**

(21) Numéro de dépôt: **11764754.5**

(22) Date de dépôt: **06.10.2011**

(51) Int Cl.:
*G06T 7/00* *(2006.01)*    *G01M 17/02* *(2006.01)*

(86) Numéro de dépôt international:
**PCT/EP2011/067471**

(87) Numéro de publication internationale:
**WO 2012/052301 (26.04.2012 Gazette 2012/17)**

(54) **METHODE D'IDENTIFICATION ET DE LIMITATION DES MOTIFS DE BASE FORMANT LA SCULPTURE DE LA BANDE DE ROULEMENT D'UN PNEUMATIQUE**

**VERFAHREN ZUR ERMITTLUNG UND DEFINITION VON GRUNDSTRUKTUREN FÜR DEN ENTWURF DES PROFILDESIGNS EINES REIFENS**

**METHOD FOR IDENTIFYING AND DEFINING BASIC PATTERNS FORMING THE TREAD DESIGN OF A TYRE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.10.2010 FR 1058525**

(43) Date de publication de la demande:
**28.08.2013 Bulletin 2013/35**

(73) Titulaires:
- **Compagnie Générale des Etablissements Michelin**
  **63000 Clermont-Ferrand (FR)**
- **Michelin Recherche et Technique S.A.**
  **1763 Granges-Paccot (CH)**

(72) Inventeurs:
- **JOLY, Alexandre**
  **F-63040 Clermont-Ferrand Cedex 9 (FR)**
- **ZANELLA, Jean-Paul**
  **F-63040 Clermont-Ferrand Cedex 9 (FR)**

(74) Mandataire: **Roussy, Delphine**
  **Manufacture Française des**
  **Pneumatiques Michelin**
  **23, place des Carmes-Déchaux**
  **DGD/PI - F35 - Ladoux**
  **63040 Clermont-Ferrand Cedex 9 (FR)**

(56) Documents cités:
**WO-A1-2009/077537**

**Description**

L'invention concerne le domaine du contrôle visuel des pneumatiques dans lequel on compare l'image d'un pneumatique à inspecter, en général issue d'un moyen d'acquisition numérique, avec une image de référence de ce pneumatique.

La comparaison de ces deux images permet, par analyse des différences, de déterminer en un point donné de l'image, les variations de la valeur d'une grandeur physique affectée à ce point et issue du moyen d'acquisition. Les grandeurs physiques mesurées par le capteur peuvent être relatives à la couleur, à la brillance, à la texture de l'objet observé ou encore à la hauteur des points par rapport à une surface de référence, lorsque l'on utilise un matériel apte à créer une image en trois dimensions.

Ces variations sont analysées à l'aide d'algorithmes ne faisant pas l'objet de la présente description, et adaptés pour déterminer le degré de conformité du pneumatique à inspecter, et décider si ce pneumatique peut être considéré comme conforme ou s'il doit être orienté vers un centre de traitement.

Dans le cas du pneumatique, cette technique s'applique pour le contrôle des zones du pneumatique obtenues par moulage à partir d'une empreinte rigide du flanc ou de la bande de roulement.

La publication WO2009077537 décrit une méthode spécialement adaptée à l'inspection des bandes de roulement de pneumatiques dont la sculpture est formée par l'assemblage d'éléments ayant des motifs de base, en nombre réduits, juxtaposés circonférentiellement et séquencés de manière précise et déterminée.

Les motifs de base de la sculpture ont des formes similaires et ont des dimensions proches mais pas totalement identiques. Chaque type de motif de base apparaît donc plusieurs fois sur la circonférence de la sculpture de l'enveloppe. Le choix des dimensions et l'agencement des motifs de base sont fait de manière judicieuse et connue de l'homme du métier, dans le but de réduire les vibrations ou les bruits de roulement.

L'objet de la méthode décrite dans la publication citée ci-dessus consiste à comparer les images de référence des seuls motifs de base, à l'image des motifs de base réels disposés sur la circonférence du pneumatique.

Toujours selon cette méthode, il suffit d'acquérir l'image de la bande de roulement d'un seul pneumatique pour obtenir une collection d'images suffisante de chacun des motifs de base, et pour calculer les images de référence moyenne de ces motifs de base en faisant l'hypothèse qu'une anomalie n'est pas susceptible de se reproduire sur l'ensemble des éléments ayant un motif de base identique.

Aussi, en préalable à la mise en oeuvre de cette méthode, il est nécessaire d'identifier et de localiser de manière précise les limites entre les éléments formant la sculpture de manière à les associer à un des motifs de base de la sculpture.

La présente invention a pour objet de proposer une méthode permettant de résoudre ce problème.

On observe en règle générale, que la juxtaposition entre deux éléments n'est jamais parfaite. Ceci se traduit soit par un léger décalage circonférentiel susceptible de produire une bavure de gomme à la surface du pneumatique, ou par un décalage radial qui forme un relief de faible hauteur.

Ces décalages de quelques centièmes de millimètres sont suffisants pour dessiner de fines traces visibles sur le pneumatique, et par conséquent, visibles également sur l'image du pneumatique.

L'objet de l'invention est de tirer profit de ce phénomène.

La méthode d'inspection selon l'invention s'intéresse à la bande de roulement d'un pneumatique dont la sculpture est formée par l'assemblage d'éléments juxtaposés circonférentiellement, séparés entre eux par des frontières de formes connues, et ayant des motifs de base, en nombre réduit et arrangés selon une séquence prédéterminée.

Cette méthode prévoit les étapes au cours desquelles :

- on réalise l'acquisition d'une image de la surface de la bande de roulement du pneumatique à inspecter formée de pixels associés à un niveau d'intensité lumineuse,
- on transforme l'image du pneumatique en décalant circonférentiellement les pixels de l'image situés axialement $(x_1, x_2)$ à une même distance d'une référence circonférentielle donnée (OY), de la valeur inverse $(-y_1, -y_2)$ du décalage circonférentiel $(y_1, y_2)$ par rapport à une ligne axiale (OX) du point $(P_1, P_2)$ situé sur la ligne de frontière de forme connue à la même distance axiale $(x_1, x_2)$ de ladite référence circonférentielle, de sorte que les frontières entre les éléments apparaissent sous la forme de traces rectilignes orientées dans la direction axiale,
- on analyse l'image à l'aide d'un filtre sensible aux contours de manière à identifier les points de l'image placés sur une droite orientée axialement, que l'on assimile aux points placés sur une ligne de frontière entre deux éléments,

L'image de la surface de la bande de roulement peut être une image bidimensionnelle en niveau de gris ou en couleur ou alternativement une image tridimensionnelle transformée de sorte que les niveaux de gris sont représentatifs des valeurs du relief dans la direction radiale.

Pour améliorer la robustesse de la détection et lorsque l'image de la surface de la bande de roulement est une image en couleur formée de l'assemblage de plusieurs images de base, il peut être utile d'appliquer ladite méthode sur chacune des images de base.

Avantageusement, on choisira un filtre sensible aux contours du type filtre de Sobel, permettant de calculer pour chaque pixel un angle de Sobel indiquant la direction de la plus forte variation du niveau d'intensité lumineuse.

Pour identifier les frontières entre les éléments on calcule la moyenne des angles de Sobel des pixels situés sur une ligne axiale, et on sélectionne les lignes ayant les moyennes les plus proches de la direction axiale correspondant à la direction des traces des lignes de frontières.

La méthode peut également prévoir de déterminer une séquence de lignes de frontières entre les éléments de l'image acquise.

Avantageusement on cherchera à établir une correspondance entre la séquence des lignes de frontières obtenue sur l'image acquise du pneumatique à inspecter et la séquence prédéterminée des frontières entre les éléments de manière à s'assurer de la détection de toutes les lignes de frontières présentes à la surface de la sculpture.

La forme des frontières peut être identique quelle que soit le motif de base, ce qui est le cas le plus fréquent, mais la sculpture peut également comprendre des motifs de base ayant des frontières de formes différentes, auquel cas on applique ladite méthode autant de fois que ladite sculpture comporte de formes de frontières différentes.

Il est également possible, après avoir détecté les points de l'image représentant des frontières entre deux éléments, de transformer à nouveau l'image en décalant circonférentiellement les pixels de l'image situés axialement $(x_1, x_2)$ à une même distance de la référence circonférentielle donnée (OY), de la même valeur $(y_1, y_2)$ que le décalage circonférentiel $(y_1, y_2)$ par rapport à la ligne axiale (OX) du point $(P_1, P_2)$ situé sur la ligne de frontière connue à la même distance axiale $(x_1, x_2)$ de ladite référence circonférentielle, de manière à reconstituer l'image non déformée de la surface du pneumatique.

La mise en oeuvre de la méthode permet, à l'aide d'algorithmes de calcul peu gourmands en temps machine, de détecter les limites entre les éléments de la bande de roulement. Elle constitue une étape préalable à la mise en oeuvre d'une méthode d'évaluation telle que décrite par exemple dans la publication WO2009077537 déjà citée.

La description qui suit permettra de mieux comprendre l'invention et ses variantes de mise en oeuvre, et s'appuie sur les figures 1 à 8 dans lesquelles :

- la figure 1 représente une vue schématique d'une bande de roulement formée de la juxtaposition d'éléments ayant des motifs de base,
- la figure 2 représente les quatre motifs de base utilisés pour élaborer la sculpture illustrée à la figure 1,
- la figure 3 représente l'image d'une bande de roulement sur laquelle apparaît les traces des frontières entre les éléments,
- la figure 4 représente les différentes étapes de l'opération de décalage,
- la figure 5 représente un graphe de la moyenne des angles de Sobel sur des lignes axiales,
- la figure 6 représente une séquence circonférentielle des lignes de frontières,
- les figures 7 et 8 représentent l'image de la bande de roulement après la mise en évidence des frontières avant et après décalage.

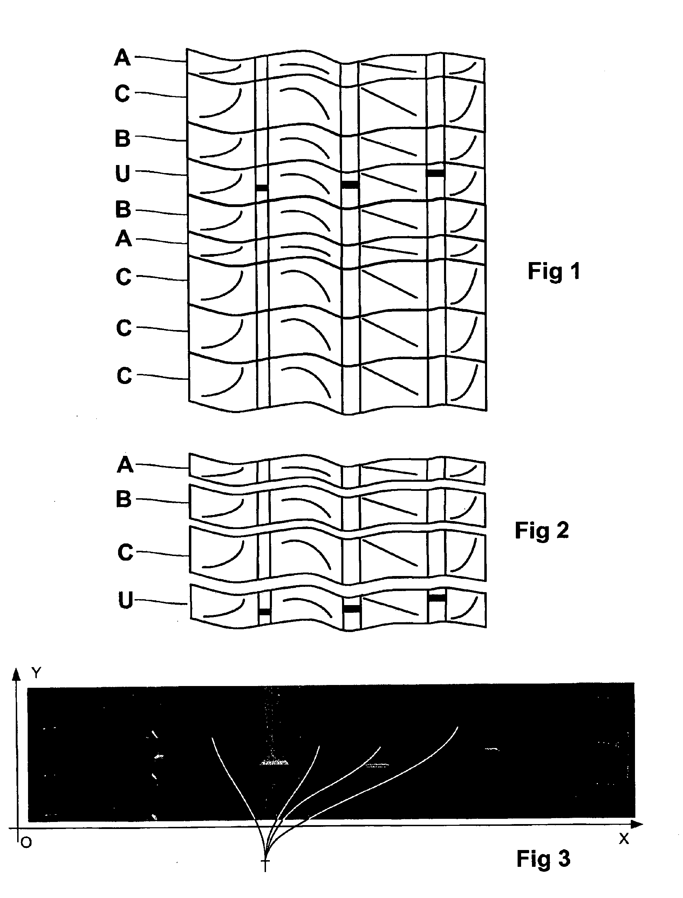

La figure 1 permet de visualiser une portion de bande de roulement de pneumatique sur laquelle on observe la présence de plusieurs types de motifs de base, notés respectivement A, B, C et U. Ces types de motifs de bases sont représentés individuellement à la figure 2, et comprennent par exemple 3 motifs A, B et C de longueurs différentes, et un motif U contenant les témoins d'usure. Ces quatre types de motif de base vont se répéter, selon une séquence précise, tout au long de la circonférence du pneumatique.

Ainsi, la séquence de la portion de bande de roulement illustrée à la figure 1 est une séquence notée ACBUBACCC. Pour une dimension donnée de cette gamme de pneumatique la séquence finale sera formée par la juxtaposition de ces quatre types de motif de base, agencés selon une séquence complexe et connue, débutant par ACBUBACCC, et se poursuivant par exemple par les motifs BCAABUAABCBCBAAABBUCACAACBAACBBAU etc...

Une dimension peut compter, en règle générale, de un à cinq motifs de base, et une bande de roulement comprend, selon les diamètres, la répétition de quatre vingt à cent cinquante motifs de base, agencés selon la séquence désirée. Il en résulte qu'un type de motif de base donné, par exemple le motif de base A, sera utilisé, selon les dimensions et le type de sculpture, entre dix à quarante fois par bande de roulement.

La forme des frontières transversales de chacun des type de motif de base est alors adaptée pour pouvoir épouser indistinctement la frontière transversale d'un motif de base quelconque d'un autre type. Aussi, la forme de ces frontières est identique quel que soit le motif de base considéré pour permettre de modifier à la demande la séquence des motifs de base.

Les motifs de base représentés à la figure 2 occupent toute la largeur transversale de la bande de roulement. Cette disposition n'est pas limitative, et les principes de l'invention peuvent s'étendre au cas où la sculpture comporterait plusieurs motifs de base différents disposés sur une même transversale. C'est le cas en particulier des sculptures dites asymétriques.

La première opération à effectuer consiste donc à réaliser une image de la surface de la bande de roulement du pneumatique à inspecter. Cette image est obtenue en faisant opérer au pneumatique un tour complet sous les moyens d'acquisition.

On obtient donc l'image déroulée de la bande de roulement dans laquelle la direction axiale du pneumatique correspond à la direction transversale de l'image (OX) et la direction circonférentielle correspond à la direction longitudinale (OY), comme cela est représenté à la figure 3. La direction radiale (OZ) correspond, dans le cas des images tridimensionnelles, à la direction d'élévation des reliefs des motifs de sculpture.

On entend par image, l'information issue d'un ou plusieurs capteurs sensibles à la lumière réfléchie, en un point donné, par le pneumatique à examiner. Cette image peut être bi ou tri dimensionnelle, à niveau gris, monochrome, ou en couleur. Elle peut être issue d'une caméra linéaire, d'une caméra matricielle à niveau de gris ou en couleur ou encore de capteurs à triangulation laser etc.... L'image tridimensionnelle peut elle-même être transformée en image bi dimensionnelle, en affectant une valeur de niveau de gris à chaque pixel de l'image en fonction de la valeur du relief à ce point de l'espace.

Une image se présente alors sous la forme d'autant de tableaux de données, ou de matrices, que de grandeurs physiques mesurées.

Pour l'exposé des étapes qui vont suivre, on admettra, pour plus de clarté, que l'image est une image en niveau de gris bidimensionnelle. L'homme de l'art fera alors les adaptations nécessaires pour adapter la méthode selon l'invention au type d'image qu'il souhaite utiliser.

La figure 3 permet de visualiser les effets liés à la présence de très légers décalages radiaux ou circonférentiels entre les éléments de la bande de roulement du pneumatique, et qui se manifestent par de légères traces (T) visibles sur les images de la surface.

En préalable à la mise en oeuvre des étapes suivantes, on mémorise les informations spécifiques relatives à la dimension à inspecter :

- la forme particulière et connue de la ligne de frontière entre les éléments,
- la séquence circonférentielle des éléments présents sur une surface de référence du pneumatique à inspecter,
- la séquence des distances circonférentielles entre les frontières des éléments sur une surface de référence du pneumatique à inspecter.

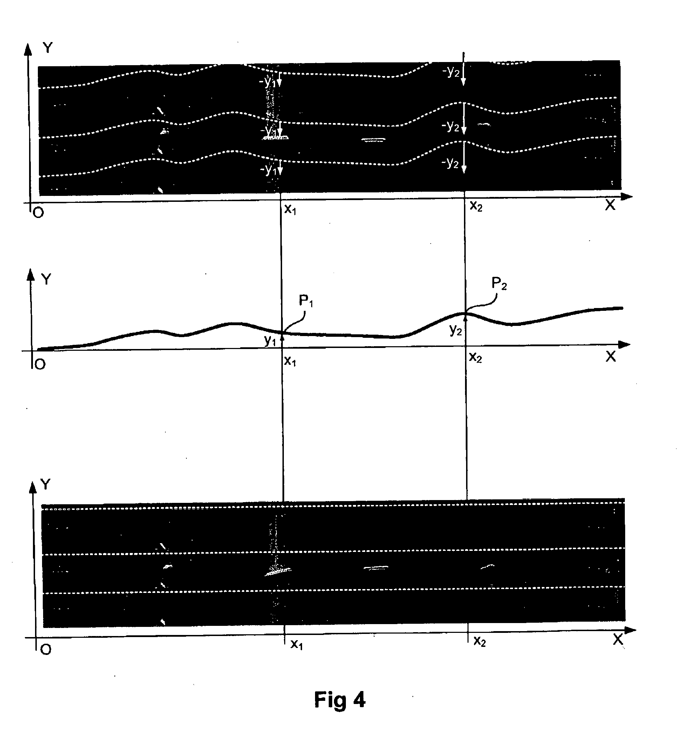

L'étape suivante de la mise en oeuvre de la méthode est illustrée par la figure 4.

L'image de départ de la figure 4 est une reproduction de la figure 3, sur laquelle les frontières entre les éléments ont été rehaussées par une ligne en pointillé.

La ligne de frontière dont la forme est connue est représenté dans dans le repère OXY tel qu'indiqué ci-dessus. Dans ce repère, il est possible d'affecter des coordonnées à tous les points de cette courbe tels que par exemple les points $P_1$ $(x_1, y_1)$, ou $P_2$ $(x_2, y_2)$.

On place alors l'image de la bande de roulement dans le même repère OXY. Et on transforme cette image de sorte que les pixels de l'image situés axialement à une même distance d'une référence circonférentielle donnée (OY) et correspondant aux points de même abscisse dans le repère OXY, sont translatés circonférentiellement d'une valeur inverse au décalage circonférentiel par rapport à une ligne axiale (OX) du point situé sur ligne de frontière connue à la même distance axiale de ladite référence circonférentielle. La valeur de cette translation circonférentielle correspond donc à l'inverse de l'ordonnée du point de la frontière situé à cette abscisse.

Ainsi, les pixels de l'image situés à l'abscisse $x_1$ sont translatés circonférentiellement d'une valeur égale à $-y_1$, et les pixels de l'image situés à l'abscisse $x_2$ sont translatés circonférentiellement d'une valeur égale à $-y_2$.

A l'issue de cette transformation, les frontières entre les éléments apparaissent sous la forme de traces rectilignes orientées dans la direction axiale comme cela est représenté dans la dernière image de la figure 4. On observera que cette transformation ne modifie pas les distances circonférentielles, et que la séquence des distances circonférentielles entre les traces rectilignes correspond à la séquence des distances circonférentielles entre les frontières.

L'étape suivante consiste alors à identifier ces lignes qui sont les signatures visibles des frontières entre les éléments.

Pour ce faire on va rechercher les contours de l'image qui ont une forme rectiligne et une orientation axiale.

La recherche des contours peut se conduire avantageusement à l'aide d'algorithmes de traitement de l'image numérique. Ces algorithmes sont fondés sur l'observation que les niveaux d'intensité de lumière ou de couleur varient de manière importante lorsque l'on passe d'un objet de l'image à un autre. On va donc rechercher les points de l'image autour desquels on passe rapidement du clair au sombre et qui correspondent le plus probablement à des contours, ainsi que l'orientation de ces contours.

En termes mathématiques, le gradient d'une fonction à deux variables (dans le cas présent l'intensité du niveau de gris ou de couleur en fonction des coordonnées de l'image) est un vecteur de dimension 2 dont les coordonnées sont les dérivées selon les directions axiales et circonférentielles. En chaque point ou pixel, le gradient pointe dans la direction du plus fort changement d'intensité, et sa longueur représente le taux de variation dans cette direction. Au niveau du contour, le gradient traverse le contour des intensités plus sombre vers les intensités les plus claires.

Parmi les algorithmes les plus courants on retiendra l'utilisation de filtres qui sont des opérateurs matriciels ayant pour objet de réaliser une convolution entre l'image considérée comme une matrice de valeurs numériques et un filtre ou un masque de convolution se présentant lui-même comme une matrice. D'une manière générale ces algorithmes sont décrits dans la publication réalise par S. Milan, H. Vaclav et B. Rogers en 2002 sous l'intitulé « *Image processing analysis and machine vision* (London , Chapman and Halll)

Parmi les algorithmes les plus connus on pourra citer plus particulièrement les algorithmes de Roberts tel que décrit dans la publication réalisée en 1965 par L Roberts intitulée « Machine perception of three dimensional solids » (J.T. Tippett, Optical and electro-optical information processing, Cambridge, Massachussets MIT press), l'algorithme de Canny tel que décrit dans la publication réalisée en 1986 par J.F. Canny sous le titre « a computational aproach to edge détection »; (IEEE trans pattern analysis and machine intelligence), ou encore l'algorithme de Prewitt et sa variante plus connue sous le nom d'algorithme de Sobel, tel que décrit par I. Sobel t G. Feldman et intitulée « A 3x3 isotropic gradient operator for image processing » (talk confence at the Stanford artificial project).

Bien que tous ces algorithmes puissent convenir, il apparaît que l'algorithme de Sobel soit celui qui présente le plus d'avantages en raison de la relative légèreté de sa mise en oeuvre et de sa capacité à s'affranchir d'un niveau de bruit important, ce qui est particulièrement intéressant dans le cas présent du fait du faible contraste de la trace formant la frontière entre deux éléments.

Les masques utilisés se présentent sous la forme de deux matrices :

$$\Delta_x = \begin{bmatrix} -1 & 0 & 1 \\ -2 & 0 & 2 \\ -1 & 0 & 1 \end{bmatrix} \text{ et } \Delta_y = \begin{bmatrix} 1 & 2 & 1 \\ 0 & 0 & 0 \\ -1 & -2 & -1 \end{bmatrix}$$

Soit A l'image source, on calcule en chaque point la valeur de $G_x = \Delta_x * A$ qui met en évidence les contours dans la direction axiale, et $G_y = \Delta_y * A$ qui met en évidence les contours dans la direction circonférentielle.

La valeur de l'intensité du gradient de variation de gris ou de couleur est approchée par la norme du vecteur $G = \sqrt{G_x^2 + G_y^2}$ , et l'orientation $\Theta$ du contour, plus communément désignée par l'angle de Sobel, est donnée par

$$\Theta = \arctan\left(\frac{G_y}{G_x}\right).$$

Cet angle $\Theta$ vaut 90° pour un pixel placé sur une ligne de contour horizontale, i.e ; axial.

La recherche des frontières entre les éléments se fait donc en recherchant les ensembles de points ayant la même orientation de $\Theta = 90°$.

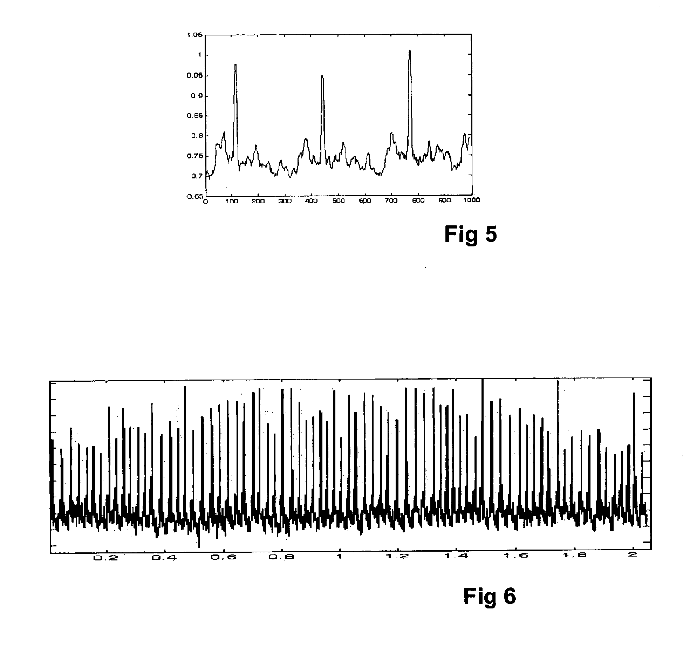

Une manière simple d'y parvenir consiste, pour chaque ligne axiale de pixels, à faire la moyenne de l'angle de Sobel des pixels situés sur une même ligne axiale. Tous les pixels situés sur la trace de la frontière entre deux éléments ayant sensiblement le même angle de Sobel, la moyenne des angles de Sobel des pixels placés sur la ligne axiale représentant une frontière sera donc proche de 90° comme cela est illustré à la figure 5 sur laquelle les pics représentent les lignes axiales sur lesquelles les angles de Sobel sont proches de 90°.

On peut donc en déduire raisonnablement que cette ligne axiale de pixels représente une ligne de frontière, et que cette ligne est placée circonférentiellement à une distance donnée de l'origine.

Il est alors possible de constituer une première séquence des lignes de frontières localisées sur l'image de la bande de roulement du pneumatique à inspecter et d'évaluer les distances circonférentielles entre chacune des lignes.

Pour ce faire, on prédétermine le seuil au delà duquel la hauteur du pic mis en évidence correspond de manière peu équivoque à la localisation d'un frontière. Cette valeur peut être fixée à titre d'exemple au ¾ de la valeur maximale de la hauteur du pic.

On recherche alors les pics situés au dessus de ce seuil, on calcule leur position. Si le nombre de pics détectés est insuffisant on abaisse alors la valeur du seuil d'un incrément jusqu'à localiser un nombre significatif de pics, correspondant par exemple à 80% du nombre théorique de pics, dont la valeur est connue et correspond au nombre de frontières et donc d'éléments formant la sculpture du pneumatique à inspecter. La figure 6 illustre une séquence complète de pics localisés circonférentiellement.

On est alors à même de calculer la séquence des pics en fonction de leur position circonférentielle et de comparer cette séquence avec la séquence théorique et connue de la dimension du pneumatique en recherchant par exemple l'écart minimum entre les deux séquences.

On en déduit une correspondance entre la séquence théorique et la séquence réelle trouvée sur l'image de la bande de roulement du pneumatique à inspecter.

Si le nombre de pics détectés est insuffisant on abaisse encore le seuil d'un incrément, jusqu'à l'identification d'un nombre suffisant de pics, par exemple 95% des frontières (i.e. des pics).

On pourrait poursuivre l'abaissement du seuil de détection jusqu'à la détection de toutes les frontières au risque de voir augmenter le nombre de détection à tord. Il est donc préférable de ne pas réduire le seuil de détection en dessous d'une limite basse pouvant correspondre par exemple à 50% du seuil maximum, ce qui en pratique permet de détecter la plupart des frontières permettant le recalage avec la séquence des écarts théoriques entre éléments.

Les frontières manquantes, correspondant aux frontières non détectées, sont alors placées directement aux positions circonférentielles correspondant à leur position dans la séquence théorique.

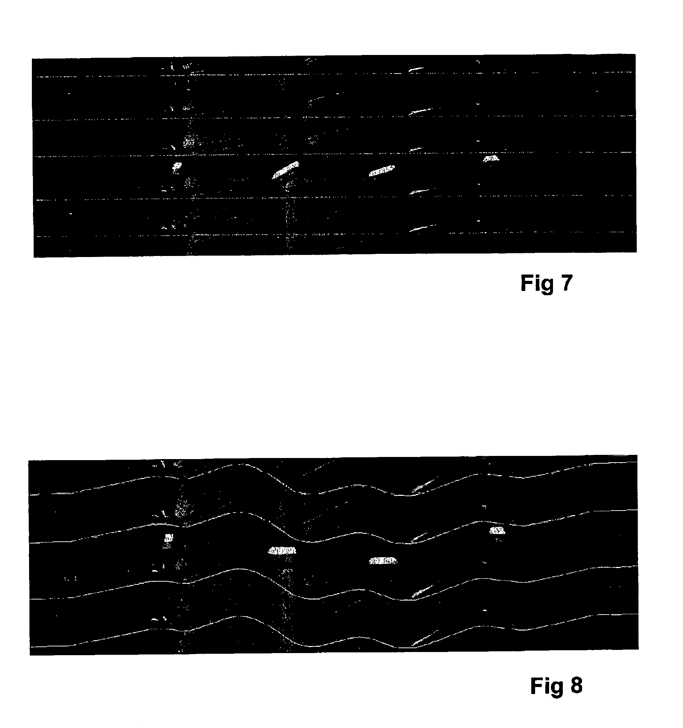

A l'issue de cette étape d'identification, l'ensemble des frontières entre les éléments est localisé sur l'image de la bande de roulement du pneumatique à inspecter, comme cela est illustré à la figure 7.

La description ci-dessus est faite pour des pneumatiques ayant des formes de frontières identiques. Il va de soi que les principes de la méthode s'appliquent également lorsque la sculpture comprend des motifs de frontières différents et pour lesquels il conviendra alors d'appliquer la méthode autant de fois que la sculpture comporte de motifs de frontières différents. Seuls les motifs d'une forme de frontière donnée apparaîtront sous la forme d'une droite orientée radialement, ce qui permet d'identifier les seules frontières dont la forme correspondant à ladite forme.

On observera également à ce stade que, lorsque l'image de la bande de roulement est une image en couleur, il est possible de traiter en parallèle les trois images en niveau de gris provenant des capteurs de base RGB du moyen d'acquisition. Ces images de base représentent les images selon les couleurs de base couramment utilisées dans les moyens d'acquisition d'image en couleur, typiquement les couleurs Rouge (R) Vert (G) et Bleue (B). En effet, les valeurs maximales des pics peuvent varier d'une image et d'une couleur à l'autre en fonction du niveau et des angles d'éclairage. Il peut alors s'avérer utile de combiner les informations en provenance de ces trois capteurs, de manière à améliorer les détections à tord ou les absences de détection.

Si l'on désire reconstituer la forme précise des lignes de frontières sur l'image de la bande de roulement du pneumatique à inspecter on peut transformer l'image en décalant circonférentiellement les pixels de l'image situés axialement ($x_1$, $x_2$) à une même distance de la référence circonférentielle donnée (OY), de la même valeur ($y_1$ $y_2$) que le décalage circonférentiel ($y_1$, $y_2$) par rapport à la ligne axiale (OX) du point ($P_1$, $P_2$) situé sur la ligne de frontière connue à la même distance axiale ($x_1$, $x_2$) de ladite référence circonférentielle, de manière à reconstituer l'image non déformée de la surface du pneumatique.

Ceci revient à opérer la transformation inverse de la transformation réalisée précédemment. Les pixels de l'image situés à l'abscisse $x_1$ sont translatés circonférentiellement d'une valeur égale à $y_1$, et les pixels de l'image situés à l'abscisse $x_2$ sont translatés circonférentiellement d'une valeur égale à $y_2$. La figure 8 illustre l'image obtenue après transformation dans laquelle les lignes de frontières sont parfaitement repérées.

Il est alors possible de découper l'image selon les lignes de frontière, de manière à constituer des collections d'image d'un même motif, et de comparer les images de chacune de ces collections d'image avec l'image de référence du motif de base qui leur est attaché. Cette image de référence peut être une image issue du modèle CAO de la sculpture ou encore une image moyenne calculée à partir de la collection d'image d'un motif de base comme cela est décrit dans la publication WO2009077537.

**Revendications**

1. Méthode d'inspection de la bande de roulement d'un pneumatique dont la sculpture est formée par l'assemblage d'éléments juxtaposés circonférentiellement, séparés entre eux par des frontières de formes connues, et ayant des motifs de base, en nombre réduit séquencés de manière prédéterminée dans laquelle :

   - on réalise l'acquisition d'une image de la surface de la bande de roulement du pneumatique à inspecter formée de pixels associés à un niveau d'intensité lumineuse, la méthode étant **caractérisée en ce que** :
   - on transforme l'image du pneumatique en décalant circonférentiellement les pixels de l'image situés axialement ($x_1$, $x_2$) à une même distance d'une référence circonférentielle donnée (OY), de la valeur inverse ($-y_1$, $-y_2$) du décalage circonférentiel ($y_1$, $y_2$) par rapport à une ligne axiale (OX) du point ($P_1$, $P_2$) situé sur la ligne de frontière de forme connue à la même distance axiale ($x_1$, $x_2$) de ladite référence circonférentielle, de sorte que les frontières entre les éléments apparaissent sous la forme de traces rectilignes orientées dans la direction axiale,
   - on analyse l'image à l'aide d'un filtre sensible aux contours de manière à identifier les points de l'image placés sur une droite orientée axialement, que l'on assimile aux points placés sur une ligne de frontière entre deux éléments.

**2.** Méthode d'inspection selon la revendication 1, dans laquelle l'image de la surface de la bande de roulement est une image bidimensionnelle en niveau de gris ou en couleur.

**3.** Méthode d'inspection selon la revendication 2, dans laquelle l'image de la surface de la bande de roulement est une image en couleur formée de l'assemblage de plusieurs images de base (RGB), dans laquelle on applique ladite méthode sur chacune des images de base.

**4.** Méthode d'inspection selon la revendication 1, dans laquelle l'image de la surface de la bande de roulement est une image tridimensionnelle transformée de sorte que les niveaux de gris sont représentatifs des valeurs du relief dans la direction radiale.

**5.** Méthode d'inspection selon l'une des revendications 1 à 4, dans laquelle le filtre sensible aux contours est un filtre du type filtre de Sobel, permettant de calculer pour chaque pixel un angle de Sobel indiquant la direction de la plus forte variation du niveau d'intensité lumineuse.

**6.** Méthode d'inspection selon la revendication 5, dans laquelle on calcule la moyenne de l'angle de Sobel des pixels situés sur une même ligne axiale.

**7.** Méthode d'inspection selon la revendication 6, dans laquelle les lignes axiales ayant les moyennes les plus proches de la direction axiale sont identifiées comme des frontières entre deux éléments.

**8.** Méthode d'inspection selon l'une des revendications 1 à 7, dans laquelle on détermine une séquence de lignes de frontières entre les éléments de l'image acquise.

**9.** Méthode d'inspection selon la revendication 8, dans laquelle on établit une correspondance entre la séquence des lignes de frontières obtenue sur l'image acquise du pneumatique à inspecter et une séquence prédéterminée des frontières entre les éléments de manière à s'assurer de la détection de toutes les lignes de frontières présentes à la surface de la sculpture.

**10.** Méthode d'inspection selon l'une des revendications 1 à 9 dans laquelle la forme des frontières est identique quelle que soit le motif de base.

**11.** Méthode d'inspection selon l'une des revendications 1 à 9 dans laquelle la sculpture comprend des motifs de base ayant des frontières de formes différentes, et dans laquelle on applique ladite méthode autant de fois que ladite sculpture comporte de formes de frontières différentes.

**12.** Méthode d'inspection selon l'une des revendications 1 à 9, dans laquelle, après avoir détecté les points de l'image représentant la frontière entre deux éléments, on transforme l'image en décalant circonférentiellement les pixels de l'image situés axialement $(x_1, x_2)$ à une même distance de la référence circonférentielle donnée (OY), de la même valeur $(y_1, y_2)$ que le décalage circonférentiel $(y_1, y_2)$ par rapport à la ligne axiale (OX) du point situé sur la frontière $(P_1, P_2)$ à la même distance axiale $(x_1, x_2)$ de ladite référence circonférentielle, de manière à reconstituer l'image non déformée de la surface du pneumatique.

**Patentansprüche**

**1.** Verfahren zur Kontrolle der Lauffläche eines Reifens, dessen Profil durch das Zusammenfügen von umfangsmäßig nebeneinander liegenden Elementen gebildet wird, die durch Grenzen mit bekannten Formen voneinander getrennt sind, und das eine geringe Anzahl von Grundstrukturen aufweist, die auf vorbestimmte Art und Weise geordnet sind, wobei:

- die Erfassung eines Bildes der Oberfläche der Lauffläche des zu kontrollierenden Reifens, das aus Pixeln besteht, die mit einem Lichtintensitätspegel verknüpft sind, ausgeführt wird,
wobei das Verfahren **dadurch gekennzeichnet ist, dass**:
- das Bild des Reifens umgewandelt wird, indem die axial befindlichen Pixel des Bildes $(x_1, x_2)$ in demselben Abstand von einer gegebenen Umfangsreferenz (OY) um den Kehrwert $(-y_1, -y_2)$ des Umfangsversatzes $(y_1, y_2)$ im Verhältnis zu einer Axiallinie (OX) des Punktes $(P_1, P_2)$, der sich auf der Grenzlinie bekannter Form befindet, in demselben Axialabstand $(x_1, x_2)$ von der Umfangsreferenz umfangsmäßig versetzt werden, so dass die Grenzen zwischen den Elementen als geradlinige Bahnen erscheinen, die in Axialrichtung orientiert sind,
- das Bild anhand eines Filters analysiert wird, das auf die Konturen anspricht, um die Punkte des Bildes zu identifizieren, die auf einer axial orientierten Geraden angeordnet sind, die mit den Punkten gleichgesetzt werden, die auf einer Grenzlinie zwischen zwei Elementen angeordnet sind.

2. Kontrollverfahren nach Anspruch 1, wobei das Bild der Oberfläche der Lauffläche ein zweidimensionales Graustufen- oder Farbbild ist.

3. Kontrollverfahren nach Anspruch 2, wobei das Bild der Oberfläche der Lauffläche ein Farbbild ist, das aus der Zusammenfügung mehrerer Basisbilder (RGB) gebildet wird, wobei das Verfahren auf jedes der Basisbilder angewendet wird.

4. Kontrollverfahren nach Anspruch 1, wobei das Bild der Oberfläche der Lauffläche ein dreidimensionales Bild ist, das derart umgewandelt wird, dass die Graustufen Werte des Reliefs in der Radialrichtung darstellen.

5. Kontrollverfahren nach einem der Ansprüche 1 bis 4, wobei das Filter, das auf die Konturen anspricht, ein Filter nach Art eines Sobel-Filters ist, der es ermöglicht, für jedes Pixel einen Sobel-Winkel zu berechnen, der die Richtung der stärksten Variation des Lichtintensitätspegels angibt.

6. Kontrollverfahren nach Anspruch 5, wobei der Mittelwert des Sobel-Winkels der Pixel berechnet wird, die sich auf derselben Axiallinie befinden.

7. Kontrollverfahren nach Anspruch 6, wobei die Axiallinien, welche die Mittelwerte aufweisen, die der Axialrichtung am nächsten liegen, als Grenzen zwischen zwei Elementen identifiziert werden.

8. Kontrollverfahren nach einem der Ansprüche 1 bis 7, wobei eine Grenzliniensequenz zwischen den Elementen des erfassten Bildes bestimmt wird.

9. Kontrollverfahren nach Anspruch 8, wobei eine Übereinstimmung zwischen der Grenzliniensequenz, die auf dem erfassten Bild des zu kontrollierenden Reifens erzielt wird, und einer vorbestimmten Sequenz der Grenzen zwischen den Elementen festgestellt wird, um sicherzustellen, dass alle Grenzlinien, die sich an der Oberfläche des Profils befinden, ermittelt werden.

10. Kontrollverfahren nach einem der Ansprüche 1 bis 9, wobei die Form der Grenzen unabhängig von der Grundstruktur identisch ist.

11. Kontrollverfahren nach einem der Ansprüche 1 bis 9, wobei das Profil Grundstrukturen umfasst, die unterschiedlich geformte Grenzen aufweisen, und wobei das Verfahren so oft angewendet wird, wie das Profil unterschiedliche Grenzformen umfasst.

12. Kontrollverfahren nach einem der Ansprüche 1 bis 9, wobei, nachdem die Punkte des Bildes ermittelt wurden, welche die Grenze zwischen zwei Elementen darstellen, das Bild umgewandelt wird, indem die Pixel des Bildes, die sich axial $(x_1, x_2)$ in demselben Abstand von der gegebenen Umfangsreferenz (OY) befinden, um denselben Wert $(y_1, y_2)$ wie der Umfangsversatz $(y_1, y_2)$ im Verhältnis zur Axiallinie (OX) des Punktes, der sich an der Grenze $(P_1, P_2)$ befindet, in demselben Axialabstand $(x_1, x_2)$ von der Umfangsreferenz umfangsmäßig versetzt werden, um das unverformte Bild der Oberfläche des Reifens wiederherzustellen.

## Claims

1. Method for inspecting the tread of a tyre whose tread pattern is formed by the assembly of circumferentially juxtaposed elements, separated from each other by boundaries of known shapes, and having a small number of basic patterns arranged in a predetermined sequence, wherein:

   - an image of the surface of the tread of the tyre to be inspected is acquired, the image being formed of pixels associated with a level of light intensity,

   the method being **characterized in that**:

- the image of the tyre is transformed by circumferentially offsetting the pixels of the image located axially ($x_1$, $x_2$) at the same distance from a given circumferential reference (OY) by the inverse ($-y_1$, $-y_2$) of the circumferential offset ($y_1$, $y_2$) with respect to an axial line (OX) of the point ($P_1$, $P_2$) located on the boundary line of known shape at the same axial distance ($x_1$, $x_2$) from said circumferential reference, in such a way that the boundaries between the elements appear in the form of straight traces orientated in the axial direction, and
- the image is analysed using a contour-detecting filter, so as to identify the points of the image placed on an axially orientated straight line, which are treated as the points placed on a boundary line between two elements.

2. Inspection method according to Claim 1, wherein the image of the surface of the tread is a two-dimensional grey level or colour image.

3. Inspection method according to Claim 2, wherein the image of the tread surface is a colour image formed by the assembly of a plurality of basic (RGB) images, wherein said method is applied to each of the basic images.

4. Inspection method according to Claim 1, wherein the image of the surface of the tread is a three-dimensional image transformed in such a way that the grey levels represent the relief values in the radial direction.

5. Inspection method according to any of Claims 1 to 4, wherein the contour-detecting filter is a filter of the Sobel filter type, by means of which a Sobel angle is calculated for each pixel, indicating the direction of the greatest variation in light intensity.

6. Inspection method according to Claim 5, wherein the average Sobel angle of the pixels located on the same axial line is calculated.

7. Inspection method according to Claim 6, wherein the axial lines having averages closest to the axial direction are identified as boundaries between two elements.

8. Inspection method according to any of Claims 1 to 7, wherein a sequence of boundary lines between the elements of the acquired image is determined.

9. Inspection method according to Claim 8, wherein a correspondence is established between the sequence of boundary lines found in the acquired image of the tyre to be inspected and a predetermined sequence of the boundaries between the elements, in order to ensure that all the boundary lines present on the surface of the tread pattern have been detected.

10. Inspection method according to any of Claims 1 to 9, wherein the shape of the boundaries is identical regardless of the basic pattern.

11. Inspection method according to any of Claims 1 to 9, wherein the tread pattern comprises basic patterns having boundaries of different shapes, and wherein said method is applied for a number of times equal to the number of different boundary shapes included in said tread pattern.

12. Inspection method according to any of Claims 1 to 9, wherein, after the detection of the points of the image representing the boundary between two elements, the image is transformed by circumferentially offsetting the pixels of the image located axially ($x_1$, $x_2$) at the same distance from the given circumferential reference (OY) by the same amount ($y_1$, $y_2$) as the circumferential offset ($y_1$, $y_2$) with respect to the axial line (OX) of the point ($P_1$, $P_2$) located on the known boundary line at the same axial distance ($x_1$, $x_2$) from said circumferential reference, so as to reconstitute the non-deformed image of the tyre surface.

Fig 1

Fig 2

Fig 3

**Fig 4**

**Fig 5**

**Fig 6**

**Fig 7**

**Fig 8**

## RÉFÉRENCES CITÉES DANS LA DESCRIPTION

**Documents brevets cités dans la description**

- WO 2009077537 A

**Littérature non-brevet citée dans la description**

- **L ROBERTS.** Machine perception of three dimensional solids. *Optical and electro-optical information processing,* 1965
- **J.F. CANNY.** a computational aproach to edge détection. *IEEE trans pattern analysis and machine intelligence,* 1986
- **I. SOBEL ; G. FELDMAN.** A 3x3 isotropic gradient operator for image processing. *talk confence at the Stanford artificial project*